# EUROPÄISCHE PATENTSCHRIFT

(11) **EP 1 168 949 B1**
(45) Veröffentlichungstag und Bekanntmachung des Hinweises auf die Patenterteilung: **26.05.2004**
(21) Anmeldenummer: 00918854.1
(22) Anmeldetag: 06.04.2000
(51) Int. Cl.: A47G 1/20

(54) **BEFESTIGUNGSELEMENT MIT VARIABLEM HUB**
FIXING ELEMENT WITH VARIABLE LIFTING HEIGHT
ELEMENT DE FIXATION A HAUTEUR DE FIXATION VARIABLE

(30) Priorität: 08.04.1999 DE 19915913
(43) Veröffentlichungstag der Anmeldung: 09.01.2002
(73) Patentinhaber: MEY, Klaus-Peter, D-50226 Frechen (DE)
(72) Erfinder: MEY, Klaus-Peter, D-50226 Frechen (DE)
(86) Internationale Anmeldenummer: PCT/EP2000/003055
(87) Internationale Veröffentlichungsnummer: WO 2000/060984

(56) Entgegenhaltungen:
- WO-A-97/42421
- DE-A- 3 834 285
- DE-A- 4 337 927
- FR-A- 494 055
- US-A- 1 946 800
- US-A- 3 006 443
- US-A- 3 812 639
- US-A- 3 935 945
- US-A- 4 002 098
- US-A- 4 056 893
- US-A- 5 059 077

## Beschreibung

Die Erfindung betrifft ein Befestigungselement, bestehend aus einem Kopf und einem Schaft, ausgebildet als Nagel oder Schraube.

Nägel oder Schrauben sind in vielfältiger Ausgestaltung für die verschiedensten Einsatzzwecke allein oder im Zusammenhang mit der Verwendung von Dübeln bekannt.

So wird in der DE 38 34 285 A1 ein Schraubenhaken beschrieben, mit einem mit Gewinde versehenen Schaft und einem einen Hakenteil enthaltenen Kopf, wobei das stimseitig im Kopf angebrachte Werkzeugprofil, beispielsweise ein Kreuzschlitzprofil, zentral symmetrisch zur Schaftachse ausgebildet ist. Durch diese Ausbildung des Schraubhakens wird insbesondere das Eindrehproblem für den Handwerker sehr günstig gelöst.

Weiterhin sind aus der US-A-50 59 077 Schrauben bekannt, mit unterschiedlich ausgebildeten Schraubenköpfen oder mit auf die Schraubenköpfe aufsetzbaren Kappen, wodurch die Schrauben für unterschiedliche Anwendungen eingesetzt werden können.

Zur einfachen Wandbefestigung von Bildern in Bilderrahmen können beispielsweise gewöhnliche Drahtstifte mit rundem Schaft und flachem Kopf verwendet werden, gegebenenfalls in Verbindung mit Dübeln; sofem dies wegen besonderer Härte der Wand geboten erscheint, werden dann bekanntermaßen zumeist zwei Bohrlöcher beabstandet nebeneinander erstellt, in die dann geeignete Dübel eingebracht werden, in die wiederum die Befestigungselemente eingebracht werden, an denen der Bilderrahmen aufgehängt wird.

Dabei ist die exakte horizontale Ausrichtung der beiden Befestigungselemente problematisch, bzw. es stellt sich beim Anbringen des Bilderrahmens heraus, dass eine Nachjustierung notwendig ist, weil die Befestigungselemente oder Bohrungen trotz vorherigen Ausmessens nicht genau waagerecht zueinander angeordnet sind.

Häufig erfolgt diese Nachjustierung durch Verbiegen der Befestigungselemente oder es muss neu ausgemessen, gebohrt bzw. ein neues Befestigungselement an anderer Stelle angebracht werden.

Zur Venneidung dieser Nachteile wird in der DE 43 37 927 A1 ein Befestigungsund Einstellorgan beschrieben, mit einem zylindrischen Justier- und Stützkörper, durch dessen exzentrische Bohrung eine eine Drehachse bildende Befestigungsschraube geführt wird. Mittels einer an einem Stimende des Justier- und Stützkörpers angeordneten Verstellscheibe ist dann bei Drehung der Verstellscheibe der Justier- und Stützkörper in seiner Höhenlage veränderbar. Nachteilig ist bei diesem bekannten Befestigungs- und Einstellorgan seine zweiteilige Ausführung, die es erforderlich macht, die Befestigungsschraube jeweils bis zu ihrem Ende einzudrehen, da sonst der Justier- und Stützkörper nicht in seiner gewünschten Lage fixierbar ist.

Weiterhin. ist aus der FR-A-494055 ein Befestigungsmittel mit einem sattelförmig ausgebildeten Schrauben- oder Nagelkopf bekannt, mit einem oben angeordneten Schlitz, in dem eine Kordel eingehängt werden kann. Durch Drehung des Befestigungsmittels um einen gewissen Winkel kann dann diese eingehängte Kordel in ihrer Höhenposition verändert werden.

Aus der US-A- 3 812 639 ist eine Schraube gemäß Oberbegriff des Anspruchs 1 bekannt.

Ausgehend von diesem Stand der Technik liegt der Erfindung die Aufgabe zugrunde, ein Befestigungselement der eingangs genannten Art wesentlich zu verbessern und mit einfachen Mitteln derart auszugestalten, dass sowohl eine problemlose Fertigung als auch eine möglichst einfache Montage und Verstellung bzw. Justierung zur gleichmäßigen Ausrichtung der Befestigungselemente untereinander in einer Ebene erreicht wird, ohne dass hierfür hohe Ansprüche an die Toleranzgenauigkeit der miteinander zusammenwirkenden Elemente erforderlich ist.

Die Lösung der Aufgabe gelingt mit der Erfindung dadurch, dass a) der Kopf aus einem Oberkopfteil und einem Unterkopfteil besteht, b) der Unterkopfteil scheibenförmig mit kreisrundem oder ovalem Querschnitt ausgebildet ist, wobei die Tiefe des Unterkopfteils bis zu 3 mm beträgt, c) der Unterkopfteil bezüglich der Schaftachse als Exzenter ausgebildet und der Oberkopfteil mit etwa 0,5 bis 1 mm stufenförmig nach außen überstehendem Rand in der Querschnittsform dem Unterkopfteil angepasst ist, sodass der Oberkopfteil ebenfalls bezüglich der Schaftachse als Exzenter ausgebildet ist, d) eine Drehung des Kopfes einen variablen Hub im Kopfbereich ermöglicht, wobei dieser Hub zwischen 0 und 5 mm liegt.

Die Erfindung wird in schematischen Zeichnungen in bevorzugten Ausführungsformen gezeigt, wobei aus den Zeichnungen weitere vorteilhafte Einzelheiten der Erfindung entnehmbar sind.

Es zeigen:
- Fig. 1: eine schematische Seitenansicht eines erfindungsgemäßen Befestigungselementes,
- Fig. 2: eine schematische Vorderansicht gemäß Fig. 1,
- Fig. 3: eine schematische Vorderansicht wie Fig. 2, jedoch mit veränderten Querschnitten und etwas gedreht.

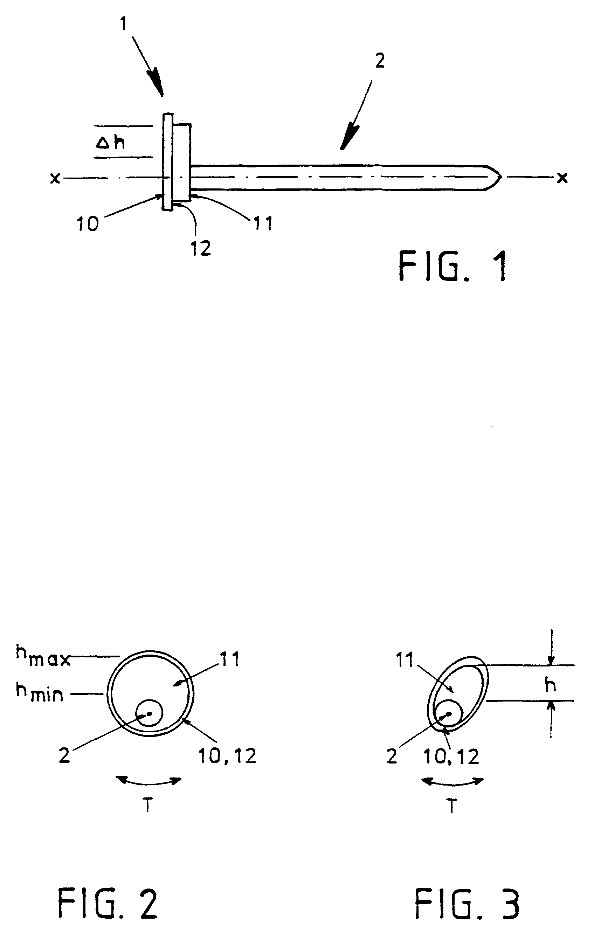

Das in den Figuren 1 bis 3 darstellte Befestigungselement besteht aus einem Kopf (1) und einem Schaft (2), ausgebildet als Nagel oder Schraube, wobei der Kopf (1) mit variablem Hub (h) ausgestattet ist. Dieser Hub (h) bzw. Δh liegt-für die meisten Anwendungsfälle ausreichend - zwischen 0 und 5 mm, vorzugsweise zwischen 1 und 3 mm.

Sofern das Befestigungselement als Schraube verwendet wird, befindet sich im Kopf (1) selbstverständlich eine Werkzeugaufnahmeöffnung (nicht dargestellt) in Form eines Längsschlitzes, Kreuzschlitzes, Sechskants, Vierkants etc., und der Schaft (2) weist ein Gewinde (nicht dargestellt) auf.

Der Kopf (1) besteht aus einem Oberkopfteil (10) und einem Unterkopfteil (11), wobei der Unterkopfteil (11) als Exzenter ausgebildet und der Oberkopfteil (10) mit etwas überstehendem Rand (12) in der Querschnittsform angepasst ist. Der Rand (12) steht etwa 0,5 bis 1 mm über. Der Rand (12) gestattet das Hintergreifen des zu befestigenden Gegenstandes, beispielsweise eines Bilderrahmens, um dessen unbeabsichtigtes Herunterfallen zu verhindern. Die Tiefe des Unterkopfteils (11) ist dabei so bemessen, dass das Profil des Bilderrahmens oder dessen Aufhängemittel hintergriffen werden kann, dafür ist eine Tiefe bzw. ein Abstand von bis zu 3 mm ausreichend.

Wie insbesondere aus Fig. 2 ersichtlich, ist der Unterkopfteil (11) als Scheibe ausgebildet. Zweckmäßigerweise ist der Rand (12) des Oberkopfteils (10) geriffelt ausgestaltet, um so die Justierung bzw. Drehung per Hand oder Werkzeug zu erleichtern. In Fig. 3 fluchtet der Schaft (2) mit dem Unterkopfteil (11), wodurch der mögliche aktuelle Hub (h), d. h. Δh = hₘₐₓ - hₘᵢₙ maximiert wird.

Die Erfindung funktioniert folgendermaßen: Nach Ausmessen und Anbringung von zwei Befestigungselementen an einer Wand oder einer anderen beliebigen Stelle erfolgt deren exakte horizontale Ausrichtung gegeneinander auf einfache Weise dadurch, dass entweder nur ein Befestigungselement, oder bei größerem Hubbedarf, beide Elemente in Drehrichtung (T) um die Achse (x-x) gedreht bzw. so einjustiert werden. Dies kann beispielsweise auch in der Weise geschehen dass in zwei Bohrlöcher jeweils ein Befestigungselement in Wirkverbindung mit einem Dübel (nicht dargestellt) eingebracht und horizontal ausgerichtet wird. Dabei wird davon ausgegangen, dass die Haftreibung des Schaftes in ihrer Aufnahmeöffnung eine Rückdrehung verhindert.

Die erfindungsgemäßen Maßnahmen und Ausgestaltungen sind nicht auf die in den Zeichnungsfiguren dargestellten Ausführungsbeispiele beschränkt. Mögliche Abwandlungen des erfindungsgemäßen Befestigungselements können darin bestehen, dass beispielsweise anstelle von Metallen oder Kunststoffen beliebig andere Werkstoffe verwendet werden. Auch können die Befestigungselemente abweichend von einer horizontalen Ausrichtung in beliebiger Winkelstellung bis zur Vertikalausrichtung verwendet werden. Die jeweilige Anordnung der Befestigungselemente ist in Anpassung an besondere Verwendungen in das Ermessen des Fachmanns gestellt.

## Patentansprüche

1. Befestigungselement in einer einstückigen Ausbildung als Nagel oder Schraube, ausgenommen Maschinenschraube, bestehend aus einem Kopf (1) und einem Schaft (2), zur Wandbefestigung von insbesondere Bilderrahmen in Wirkverbindung mit einem Dübel, **dadurch gekennzeichnet, dass**
a) der Kopf (1) aus einem Oberkopfteil (10) und einem Unterkopfteil (11) besteht,
b) der Unterkopfteil (11) scheibenförmig mit kreisrundem oder ovalem Querschnitt ausgebildet ist, wobei die Tiefe des Unterkopfteils (11) bis zu 3 mm beträgt,
c) der Unterkopfteil (11) bezüglich der Schaftachse (x-x) als Exzenter ausgebildet und der Oberkopfteil (10) mit etwa 0,5 bis 1 mm stufenförmig nach außen überstehendem Rand (12) in der Querschnittsform dem Unterkopfteil (11) angepasst ist, sodass der Oberkopfteil (10) ebenfalls bezüglich der Schaftachse (x-x) als Exzenter ausgebildet ist,
d) eine Drehung des Kopfes (1) einen variablen Hub (Δh) im Kopfbereich ermöglicht, wobei dieser Hub (Δh) zwischen 0 und 5 mm liegt.

2. Befestigungselement nach Anspruch 1, **dadurch gekennzeichnet, dass** sich zur axialen Drehung des Befestigungselements im Kopf (1) eine Werkzeugaufnahmeöffnung befindet und/oder der Rand (12) des Oberkopfteils (10) geriffelt ausgebildet ist.

## Claims

1. A securing element in a single-piece design as a nail or screw, except for a machine screw, consisting of a head (1) and a shaft (2), in particular for securing picture frames to a wall in functional conjunction with a dowel, **characterised in that**:
a) The head (1) consists of an upper head part (10) and a lower head part (11),
b) The lower head part (11) is designed in disk shape with a circular or oval cross-section, whereby the depth of the lower head part (11) amounts to up to 3 mm,
c) The lower head part (11) is formed as eccentric in relation to the shaft axis (x-x) and the upper head part (10) is adapted to the lower head part (11) with an edge (12) in the shape of the cross-section projecting outwards some 0.5 to 1 mm in step fashion, so that the upper head part (10) is likewise formed as eccentric in relation to the shaft axis (x-x),
d) A rotation of the head (1) allows for a variable stroke (Δh) in the head area, whereby this stroke (Δh) lies between 0 and 5 mm.

2. The securing element according to Claim 1, **characterised in that** a tool accommodation aperture for the axial rotation of the securing element is located in the head (1), and/or the edge (12) of the upper head part (10) is designed to be grooved.

## Revendications

1. Elément de fixation de conception monobloc sous forme d'un clou ou d'une vis, à l'exception d'une vis pour machines, constitué d'une tête (1) et d'une tige (2), destiné notamment à fixer des tableaux au mur, en coopération active avec une cheville, **caractérisé en ce que**
a) la tête (1) est constituée d'une partie supérieure de tête (10) et d'une partie inférieure de tête (11),
b) la partie inférieure de la tête (11) est conçue sous forme d'une rondelle à section transversale circulaire ou ovale, la profondeur de la partie inférieure de la tête (11) pouvant atteindre 3 mm,
c) la partie inférieure de la tête (11) étant conçue sous forme d'excentrique par rapport à l'axe de la tige (x-x) et la partie supérieure de la tête (10) avec un bord (12) dépassant en gradins d'environ 0,5 à 1 mm vers l'extérieur étant adaptée à la partie inférieure de la tête (11), par la forme de sa section transversale, pour que la partie supérieure de la tête (10) soit également conçue en forme d'excentrique, par rapport à l'axe de la tige,
d) une rotation de la tête (1) permet une levée (Δh) variable dans la zone de tête, cette levée (Δh) se situant entre 0 et 5 mm.

2. Elément de fixation selon la revendication 1, **caractérisé en ce qu'**un orifice de réception d'un outil se situe dans la tête (1) pour permettre la rotation axiale de l'élément de fixation et/ou le bord (12) de la partie supérieure de la tête (10) est cannelé.
